(19) **Europäisches Patentamt / European Patent Office / Office européen des brevets**

(11) **EP 4 651 496 A1**

(12) **EUROPEAN PATENT APPLICATION**
published in accordance with Art. 153(4) EPC

(43) Date of publication:
**19.11.2025 Bulletin 2025/47**

(21) Application number: **24741682.9**

(22) Date of filing: **10.01.2024**

(51) International Patent Classification (IPC):
**H04N 19/61** *(2014.01)*    **H04N 19/70** *(2014.01)*
**H04N 19/105** *(2014.01)*    **H04N 19/184** *(2014.01)*
**G06N 3/04** *(2023.01)*

(52) Cooperative Patent Classification (CPC):
**G06N 3/04; H04N 19/105; H04N 19/184;
H04N 19/61; H04N 19/70**

(86) International application number:
**PCT/KR2024/000440**

(87) International publication number:
**WO 2024/151061 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 KR 20230003352**

(71) Applicant: **LG Electronics Inc.**
**Yeongdeungpo-gu**
**Seoul 07336 (KR)**

(72) Inventors:
- **GWAK, Donggyu**
  **Seoul 06772 (KR)**
- **LIM, Jaehyun**
  **Seoul 06772 (KR)**
- **KIM, Chulkeun**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **CHANNEL PREDICTION-BASED FEATURE ENCODING/DECODING METHOD AND DEVICE, AND RECORDING MEDIUM STORING BITSTREAM**

(57)    A feature encoding/decoding method and device, and a computer-readable recording medium produced by the feature encoding method are provided. The feature decoding method according to the present disclosure is a feature decoding method performed by the feature decoding device and may comprise the steps of: obtaining reference information from a bitstream; determining at least one reference channel for a target channel on the basis of the reference information; and predicting the target channel on the basis of the determined reference channel.

FIG. 14

```
                    START
                      │
                      ▼
         ┌────────────────────────────────┐
         │  OBTAIN TRANSFORM INFORMATION  │──── S1410
         │      AND REFERENCE INFORMATION │
         └────────────────────────────────┘
                      │
                      ▼
         ┌────────────────────────────────┐
         │   DETERMINE REFERENCE CHANNEL  │──── S1420
         └────────────────────────────────┘
                      │
                      ▼
         ┌────────────────────────────────┐
         │      PREDICT TARGET CHANNEL    │──── S1430
         └────────────────────────────────┘
                      │
                      ▼
                     END
```

**Description**

[Technical Field]

The present disclosure relates to a feature encoding/decoding method and apparatus, and more particularly, to a method of predicting a channel based on reference relationships among channels.

[Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

[Disclosure]

[Technical Problem]

The present disclosure is to provide a feature encoding/decoding method and apparatus with improved encoding/decoding efficiency.
The present disclosure is to provide a feature encoding/decoding method and apparatus based on reference relationships among channels.
The present disclosure is to provide a feature encoding/decoding method and apparatus for predicting a channel based on various types of transforms.
The present disclosure is to provide a method of transmitting a bitstream generated by an encoding method or apparatus according to the present disclosure.
The present disclosure is to provide a recording medium storing a bitstream generated by an encoding method or apparatus according to the present disclosure.
The present disclosure is to provide a recording medium storing a bitstream received and decoded by a decoding apparatus according to the present disclosure and used for restoring a feature.
The technical problems to be achieved in the present disclosure are not limited to the technical problems described above, and other technical problems not described may be clearly understood by those of ordinary skill in the art from the following descriptions.

[Technical Solution]

A feature decoding method according to an aspect of the present disclosure may be a feature decoding method performed by a feature decoding apparatus, including obtaining reference information from a bitstream, determining at least one reference channel for a target channel based on the reference information and predicting the target channel based on the determined reference channel.
A feature encoding method according to another aspect of the present disclosure may be a feature encoding method performed by a feature encoding apparatus, including determining at least one reference channel for a target channel, and predicting the target channel based on the determined reference channel, wherein reference information indicating the determined reference channel is encoded into the bitstream.
A recording medium according to another aspect of the present disclosure may store a bitstream generated by the feature encoding method or the feature encoding apparatus of the present disclosure.
A bitstream transmission method according to another aspect of the present disclosure may transmit a bitstream generated by the feature encoding method or the feature encoding apparatus of the present disclosure to a feature decoding apparatus.
The features briefly summarized above for the present disclosure are merely an exemplary aspect of a detailed description of the present disclosure described below, and do not limit the scope of the present disclosure.

[Advantageous Effects]

According to the present disclosure, a feature encoding/decoding method and apparatus with improved encoding/decoding efficiency may be provided.

In addition, according to the present disclosure, prediction accuracy may be improved by predicting among channels based on reference relationships among the channels.

The effects obtainable from the present disclosure are not limited to the effects described above, and other effects not described may be clearly understood by those of ordinary skill in the art from the following descriptions.

[Description of Drawings]

FIG. 1 is a diagram schematically showing a VCM system to which embodiments of the present disclosure may be applied.

FIG. 2 is a diagram schematically showing a VCM pipeline structure to which embodiments of the present disclosure may be applied.

FIG. 3 is a diagram schematically showing an image/video encoder to which embodiments of the present disclosure may be applied.

FIG. 4 is a diagram schematically showing an image/video decoder to which embodiments of the present disclosure may be applied.

FIG. 5 is a flowchart schematically showing a feature/feature map encoding procedure to which embodiments of the present disclosure may be applied.

FIG. 6 is a flowchart schematically showing a feature/feature map decoding procedure to which embodiments of the present disclosure may be applied.

FIG. 7 is a diagram illustrating a feature extraction network to which embodiments of the present disclosure may be applied.

FIG. 8 is a diagram illustrating an example of data distribution characteristics of a video source.

FIG. 9 is a diagram illustrating an example of data distribution characteristics of a feature set.

FIG. 10 is a diagram illustrating an example in which channel data is visualized and packed into frames.

FIG. 11 is a diagram illustrating an example of reference relationships among channels.

FIG. 12 is a diagram illustrating an example of predicting a channel based on a transform and a weighted sum.

FIG. 13 to FIG. 20 are flowcharts illustrating feature encoding methods and feature decoding methods according to embodiments of the present disclosure.

FIG. 21 is a diagram showing an example of a content streaming system to which embodiments of the present disclosure may be applied.

FIG. 22 is a diagram showing another example of a content streaming system to which embodiments of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

## Overview of VCM System

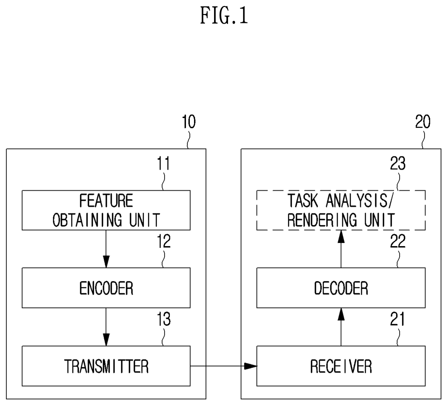

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

**VCM Pipeline**

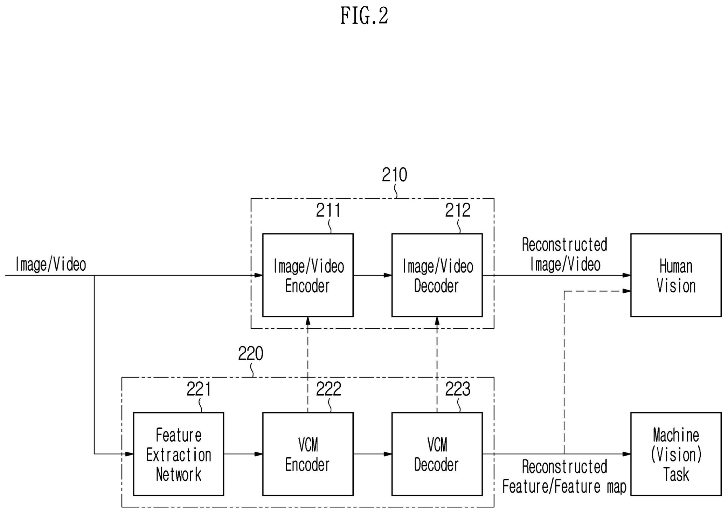

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

**Encoder**

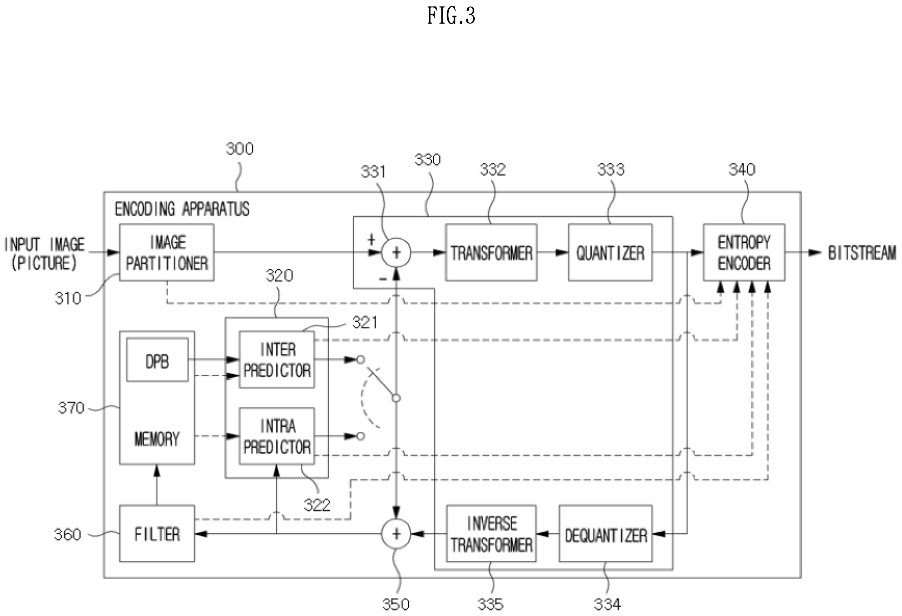

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

## Decoder

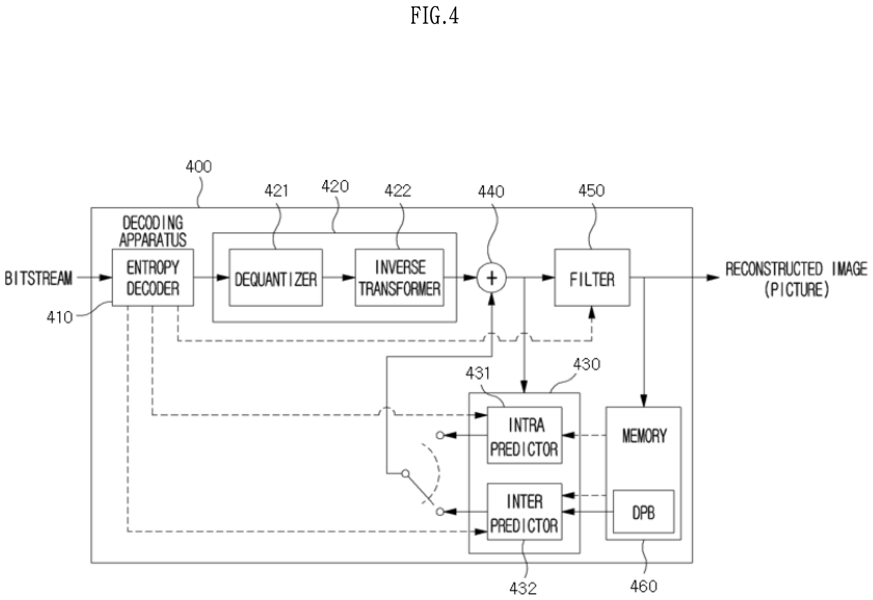

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder). In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

**Feature/Feature Map Encoding Procedure**

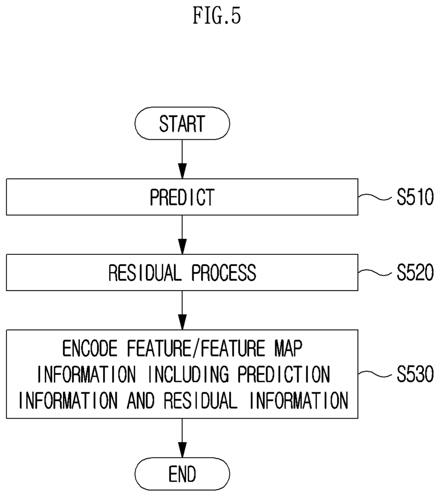

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/-feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

## Feature/Feature Map Decoding Procedure

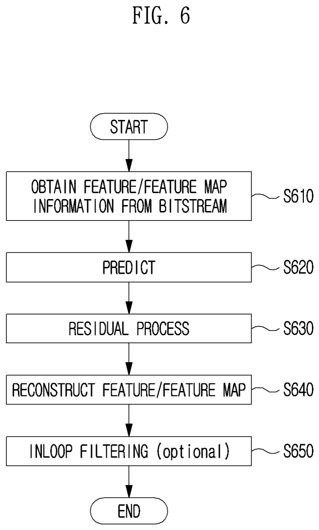

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

## Feature Extraction and Data Distribution Characteristic

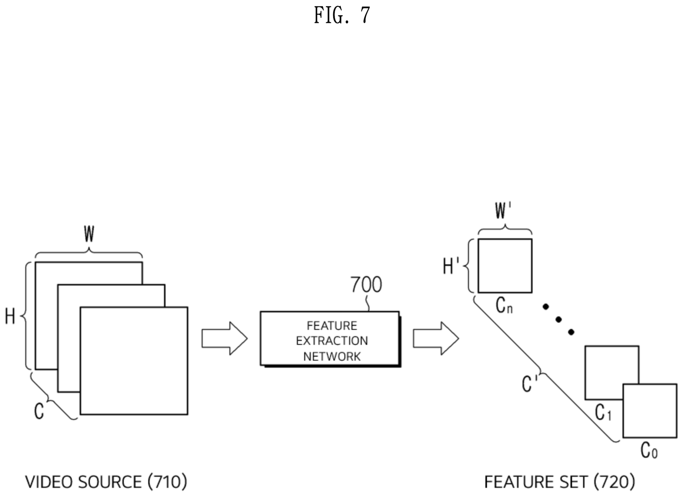

FIG. 7 is a diagram illustrating an example of a feature extraction method using a feature extraction network 700.

Referring to FIG. 7, the feature extraction network 700 may receive a video source (Image/Video, 710) and perform a feature extraction operation to output a feature set 720 of the video source 710. The feature set 720 may include a plurality of features (C0, C1, ..., Cn) extracted from the video source 710 and may be represented as a feature map. Each of the features (C0, C1, ..., Cn) may include a plurality of characteristic elements and may have different data distribution characteristics.

In FIG. 7, W, H, and C may respectively represent the width, height, and number of channels of the video source 710. Here, the number of channels C of the video source 710 may be determined based on the image format of the video source 710. For example, when the video source 710 has an RGB image format, the number of channels C of the video source 710 may be 3.

In addition, W', H', and C' may respectively represent the width, height, and number of channels of the feature set 720. The number of channels C' of the feature set 720 may be equal to the total number (n+1) of the features (C0, C1, ..., Cn) extracted from the video source 710. In one example, the number of channels C' of the feature set 720 may be greater than the number of channels C of the video source 710.

The properties (W', H', C') of the feature set 720 may vary depending on the properties (W, H, C) of the video source 710. For example, as the number of channels C of the video source 710 increases, the number of channels C' of the feature set 720 may also increase. In addition, the properties (W', H', C') of the feature set 720 may vary depending on the

**EP 4 651 496 A1**

type and property of the feature extraction network 700. For example, when the feature extraction network 700 is implemented as an artificial neural network (e.g., CNN, DNN, etc.), the properties (W', H', C') of the feature set 720 may vary depending on the position of the layer that outputs each feature (C0, C1, ..., Cn).

The video source 710 and the feature set 720 may have different data distribution characteristics. For example, the video source 710 may generally consist of one channel (grayscale image) or three channels (RGB image). The pixels included in the video source 710 may have the same integer value range across all channels and may have non-negative values. In addition, each pixel value may be evenly distributed within a predetermined integer value range. In contrast, the feature set 720 may consist of various numbers of channels (e.g., 32, 64, 128, 256, 512, etc.) depending on the type (e.g., CNN, DNN, etc.) and layer position of the feature extraction network 700. Feature elements included in the feature set 720 may have different ranges of real values for each channel and may also have negative values. In addition, each feature element value may be densely distributed in a specific region within a predetermined real value range.

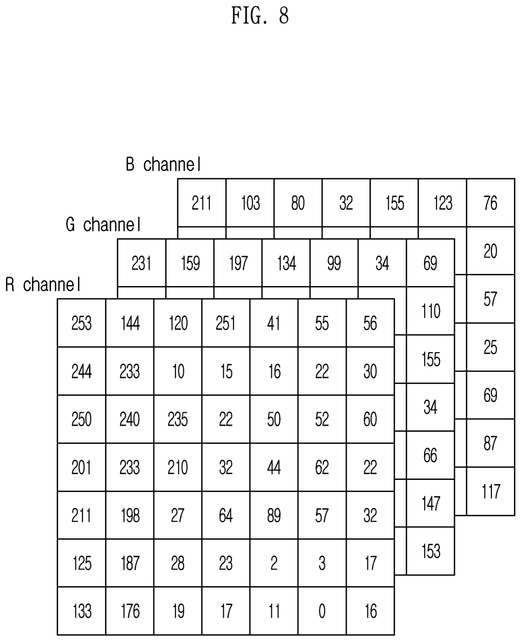

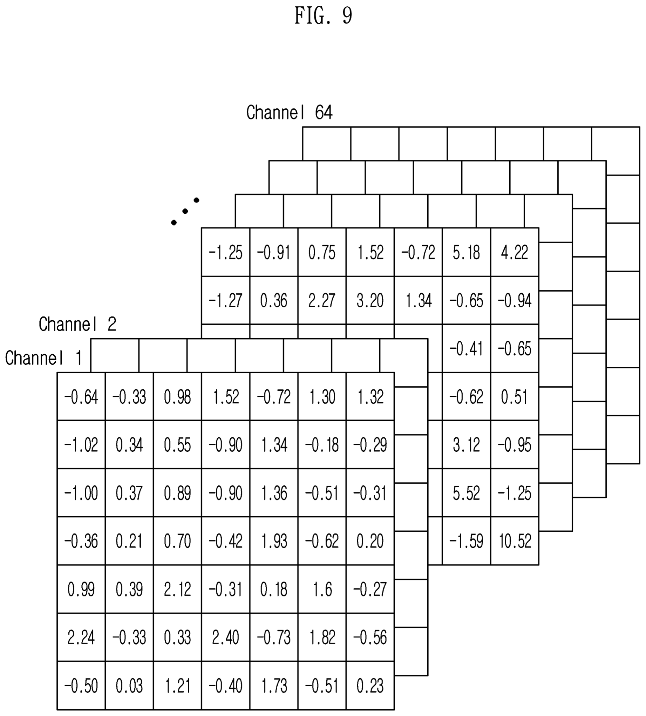

FIG. 8 is a diagram illustrating data distribution characteristics of a video source, and FIG. 9 is a diagram illustrating data distribution characteristics of a feature set.

Referring to FIG. 8, the video source may consist of a total of three channels-R, G, and B channels (R channel, G channel, B channel)-and each pixel value may have an integer value range from 0 to 255. In this case, the data type of the video source may be represented as an 8-bit integer type.

In contrast, referring to FIG. 9, the feature set may consist of 64 channels (features), and each feature element value may have a real value range from $-\infty$ to $+\infty$. In this case, the data type of the feature set may be represented as a 32-bit float type.

The feature set may have a feature element value of a float type and may have different data distribution characteristics for each channel (or feature). An example of the data distribution characteristics for each channel of the feature set is shown in Table 1.

[Table 1]

| Channel | Average($\mu$) | Standard derivation($\sigma$) | Max | Min |
|---|---|---|---|---|
| $C_0$ | 10 | 20 | 90 | 60 |
| $C_1$ | 30 | 10 | 70.5 | -70.2 |
| ... | ... | ... | ... | ... |
| $C_n$ | 100 | 5 | 115.8 | 80.2 |

Referring to Table 1, the feature set may consist of a total of n+1 channels ($C_0$, $C_1$, ..., $C_n$). The mean value ($\mu$), standard deviation ($\sigma$), maximum value (Max), and minimum value (Min) of feature elements may differ for each channel ($C_0$, $C_1$, ..., $C_n$). For example, the mean value ($\mu$) of the feature elements included in channel 0 ($C_0$) may be 10, the standard deviation ($\sigma$) may be 20, the maximum value (Max) may be 90, and the minimum value (Min) may be 60. In addition, the mean value ($\mu$) of the feature elements included in channel 1 ($C_1$) may be 30, the standard deviation ($\sigma$) may be 10, the maximum value (Max) may be 70.5, and the minimum value (Min) may be -70.2. Furthermore, the mean value ($\mu$) of the feature elements included in channel n ($C_n$) may be 100, the standard deviation ($\sigma$) may be 5, the maximum value (Max) may be 115.8, and the minimum value (Min) may be 80.2.

Quantization of a feature/feature map may be performed based on different data distribution characteristics for each channel, as described above. Feature/feature map data of a float type may be converted into an integer type through quantization.

Meanwhile, due to spatiotemporal similarity between consecutive frames, feature sets and/or channels that are consecutively extracted from a video source may have identical/similar data distribution characteristics. An example of data distribution characteristics of consecutive feature sets is shown in Table 2.

[Table 2]

| Feature set | Average($\mu$) | Standard derivation($\sigma$) | Max | Min |
|---|---|---|---|---|
| $f_{F0}$ | 50 | 10 | 110.5 | 10.7 |
| $f_{F1}$ | 52 | 11 | 120.5 | 11.5 |
| $f_{F2}$ | 53 | 10 | 115 | 5 |

In Table 2, $f_{F0}$ denotes a first feature set extracted from frame 0 ($F_0$), $f_{F1}$ denotes a second feature set extracted from frame 1 ($F_1$), and $f_{F2}$ denotes a third feature set extracted from frame 2 ($F_2$).

Referring to Table 2, the consecutive first to third feature sets ($f_{F0}$, $f_{F1}$, $f_{F2}$) may have identical/similar mean values ($\mu$), standard deviations ($\sigma$), maximum values (Max), and minimum values (Min).

In addition, due to spatiotemporal similarity between consecutive frames, corresponding channels within feature sets consecutively extracted from a video source may have identical/similar data distribution characteristics. An example of the data distribution characteristics of corresponding channels of consecutive feature sets is shown in Table 3.

[Table 3]

| Feature set | Average($\mu$) | Standard derivation($\sigma$) | Max | Min |
|---|---|---|---|---|
| $f_{F0C0}$ | 40 | 10 | 110.5 | 10.7 |
| $f_{F1C0}$ | 40 | 11 | 111.5 | 11.5 |

In Table 3, $f_{F0C0}$ denotes the first channel within the first feature set extracted from frame 0 ($F_0$), and $f_{F1C0}$ denotes the first channel within the second feature set extracted from frame 1 ($F_1$).

Referring to Table 3, the first channel ($f_{F0C0}$) of the first feature set and the second channel ($f_{F0C1}$) of the second feature set corresponding thereto may have identical/similar mean values ($\mu$), standard deviations ($\sigma$), maximum values (Max), and minimum values (Min).

Prediction of a feature/feature map may be performed based on, for example, the similarity of data distribution characteristics among the above-described feature sets or channels.

**Embodiments**

When a deep neural network is required to perform a specific task based on an input image, due to the high complexity of the deep neural network and the limited capability of a device, it may be necessary to transmit a feature/feature map extracted from the deep neural network of the device to another device for processing. A feature/-feature map extracted from a single input image may consist of multiple channels, and there may be certain correlations among the channels, cross-channel prediction may be possible. However, since each channel data results from applying multiple transforms included in the deep neural network to the input image data, a method that simply derives differential data between an encoded/decoded reference channel data itself and an encoding/decoding target channel data may lead to an increase in residual data. In addition, when multiple channel data in a feature/feature map are packed into a single frame according to a conventional technique, the positional differences of each channel data within the frame may make a cross-channel prediction using correlations among channels difficult during encoding/decoding.

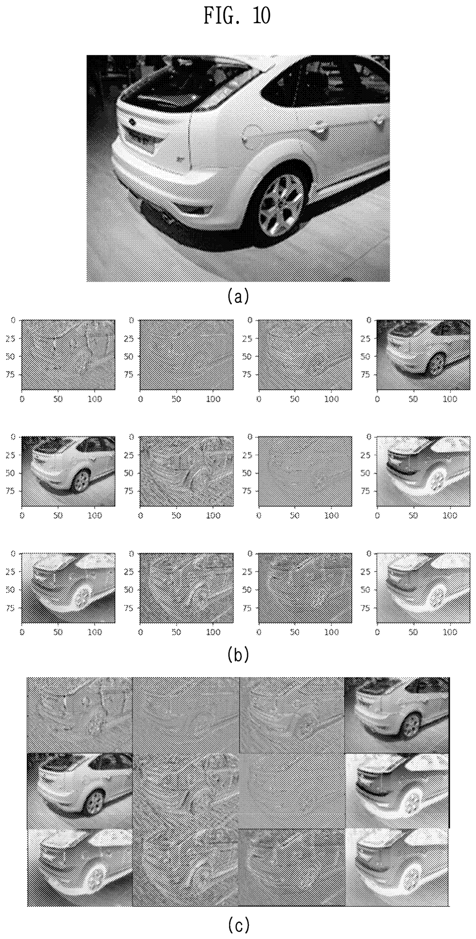

FIG. 10 is an example of visualizing multiple channel data within a feature/feature map and packing them into a single frame according to a conventional technique. FIG. 10(a) shows an example of an input image to a deep neural network, FIG. 10(b) shows an example of visualizing multiple channel data within the feature/feature map extracted from the input image, and FIG. 10(c) shows an example of packing the multiple channel data into a single frame according to a conventional technique.

As shown in FIG. 10(b), a feature/feature map extracted from a single input image may consist of multiple channels (channel data), and there may be certain correlations among the channels. However, since each channel is the result of applying multiple transforms included in deep neural network to the input image data, simply deriving a difference (differential data) between the encoded/decoded reference channel (reference channel data) itself and the encoding/-decoding target channel (target channel data) may result in an increase in residuals (residual data). In addition, as shown in FIG. 10(c), when the channels are packed into a single frame, the positional differences of each channel within the frame may make a cross-channel prediction using correlations among channels difficult. For this reason, an increase in residuals between the prediction result and the encoding/decoding target information (target channel) may occur, and additional bit consumptions for signaling may also occur.

Embodiments of the present disclosure propose a method of performing transform-based prediction on multiple channels within a feature/feature map in order to generate a compressed bitstream for transmitting the feature/feature map extracted from a deep neural network for performing a machine task. In addition, the embodiments of the present disclosure propose a method of performing a cross-channel prediction by signaling reference relationships among channels based on a graph structure and signaling transform related information for cross-channel prediction.

A feature/feature map extracted by a deep neural network using frames of an image or video as input may consist of multiple channels. The embodiments of the present disclosure propose a method of constructing a graph in which each channel is a node and the reference relationship for cross-channel prediction is an edge, and signaling reference relationships among channels based on the graph structure. In addition, the embodiments of the present disclosure propose a method of signaling, along with the edge, information for cross-channel prediction such as a predefined transform (a static transform), a variable transform that may be defined by decoded parameter, and weights for each transform. Additionally, the embodiments of the present disclosure propose a method of performing cross-channel prediction based on a weighted sum of transform-applied prediction data.

The methods proposed by the present disclosure may enable more efficient reduction of the size of a compressed bitstream by more accurate prediction of encoding/decoding target channel data from reference channel data, while still allowing the execution of a machine task with a similar level of accuracy after encoding/decoding.

Hereinafter, embodiments proposed by the present disclosure will be described in detail.

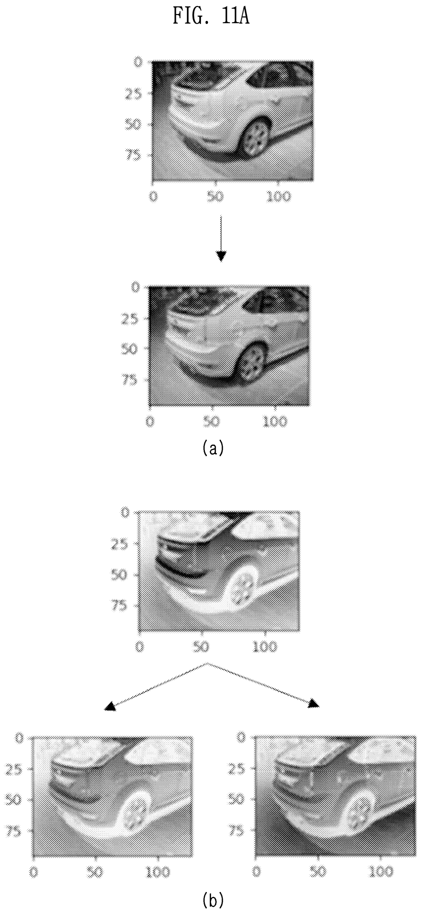

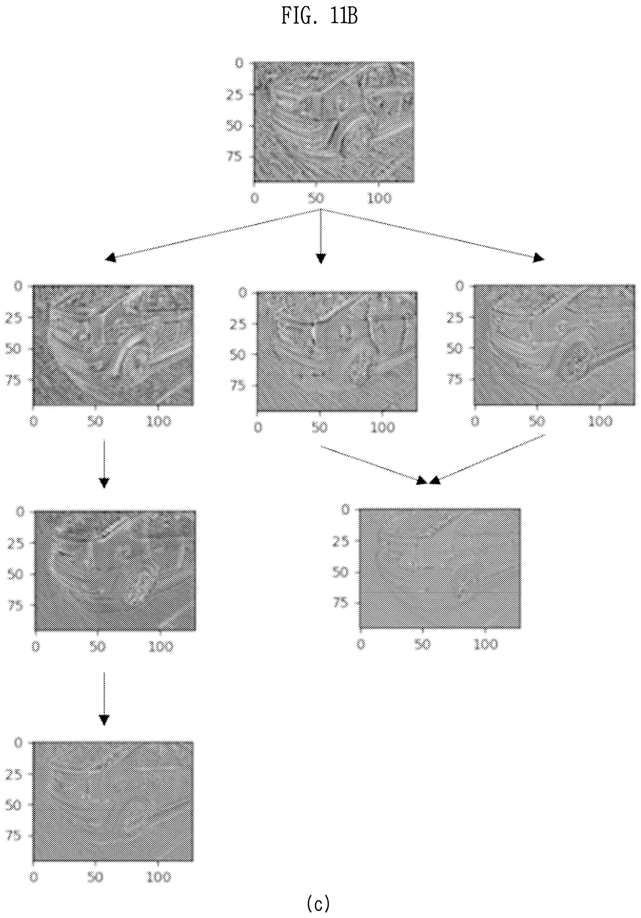

FIG. 11A and FIG. 11B illustrate examples of constructing a graph representing reference relationships among channels for multiple channels of a feature/feature map. In FIG. 11A and FIG. 11B, the channel from which an arrow originates may correspond to a reference channel for prediction, and the channel to which the arrow points may correspond to a target channel. The target channel may be a channel from which a residual is obtained from a prediction value obtained through cross-channel prediction from the reference channel. A channel reconstructed using the encoded/decoded residual value and the prediction value may be used again as a reference channel for another channel.

According to the examples of FIG. 11A and FIG. 11B, reference relationship for cross-channel prediction may be signaled to a decoder with a smaller bit amount compared to a conventional method of packing into a single frame, and residual data may be reduced by facilitating cross-channel prediction during encoding/decoding. In addition, by applying a predefined transform (static transform) and a variable transform that may be defined by a decoded parameter to the reference channel to generate multiple candidate channels (candidate channel data), and performing prediction based on a weighted sum according to the weight of each candidate channel, a more accurate prediction of the encoding/decoding target channel from the reference channel may be performed. In addition, such accurate prediction may reduce the size of the compressed bitstream more efficiently and improve compression efficiency while maintaining high prediction accuracy, thereby preserving the performance of the machine task.

Equation 1 illustrates a method of predicting a target channel according to the present disclosure.

[Equation 1]

$$P = w_{s1} \odot f_{s1}(R) + w_{s2} \odot f_{s2}(R) + \cdots + w_{sm} \odot f_{sm} + w_{v1} \odot f_{v1;\theta_1}(R) + w_{v2} \odot f_{v2;\theta_2}(R) + \cdots + w_{vn} \odot f_{vn;\theta_n}(R)$$

In Equation 1, P may represent a prediction value of a target channel, or a matrix of cross-channel prediction data, and $\odot$ may represent element-wise multiplication between matrices. A set of static transforms Fs may consist of m static transforms Fs = {$f_{s1}$, $f_{s2}$, ..., $f_{sm}$}, which are predefined identically at both the encoder and the decoder, and a set of variable transforms Fv may consist of n variable transforms Fv = {$f_{v1}$, $f_{v2}$, ..., $f_{vn}$}, which are defined identically at both the encoder and the decoder. The variable transforms may be defined by decoded parameters $\theta_1$, $\theta_2$, ..., $\theta_n$.

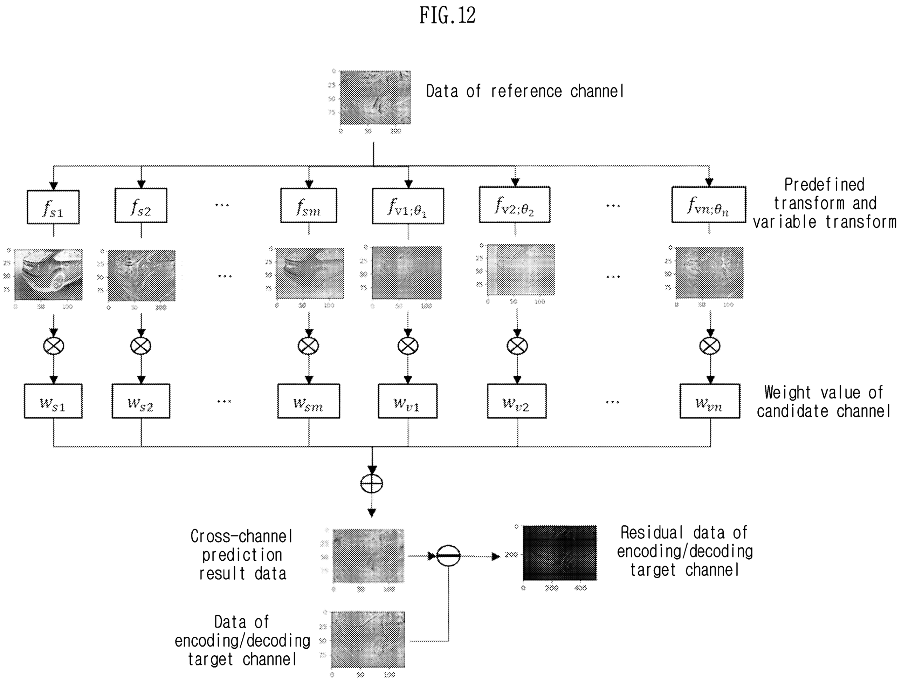

As shown in FIG. 12, by applying at least one of the static transform ($f_{s1}$, $f_{s2}$, ..., $f_{sm}$) or the variable transform ($f_{v1}$, $f_{v2}$, ..., $f_{vn}$) to the reference channel, m+n candidate channels (candidate channel data) may be generated, and cross-channel prediction may be performed based on a weighted sum of the candidate channels using weights ($w_{s1}$, $w_{s2}$, ..., $w_{sm}$ and $w_{v1}$, $w_{v2}$, ..., $w_{vn}$). The predicted result (cross-channel prediction result data) may be used to derive differential data with target channel (residual data of the encoding/decoding target channel).

Although Equation 1 and FIG. 12 illustrate a case in which both static transform and variable transform are used, candidate channel data may be generated, and prediction of the target channel may be performed by using only static transform or only variable transform.

Table 4 to Table 6 illustrate examples of syntax structures for signaling information required during the decoding process in transform-based cross-channel prediction.

[Table 4]

| seq_parameter_set_rbsp( ) { | Descriptor |
|---|---|
| ... | |
| **sps_gicp_enabled_flag** | u(1) |
| if(sps_gicp_enabled_flag) { | |
|    **sps_gicp_transform_table()** | |
|    for(channel_node_idx = 0; channel_node_idx < num_transformed_channels; channel_node_idx++) | |
|      **gicp_channel_edge_info(**channel_node_idx) | |

(continued)

| | |
|---|---|
| } | |
| ... | |
| } | |

[Table 5]

| sps_gicp_transform_table () { | Descriptor |
|---|---|
| **gicp_static_transform_table_size** | u(8) |
| for(transform_idx = 0; transform_idx < gicp_static_transform_table_size; transform_idx++) | |
| **gicp_static_transform_table**[transform_idx] | u(16) |
| **gicp_variable_transform_table_size** | u(8) |
| for(transform_idx = 0 ; transform_idx < gicp_variable_transform_table_size; transform_idx++) { | |
| **gicp_variable_transform_table**[transform_idx] | ae(v) |
| for(param_idx = 0; param_idx < GicpNumVariableTransformParams[gicp_variable_transform_table[transfo rm_idx]]; param_idx++) | |
| **gicp_variable_transform_params**[transform_idx] [param_idx] | ae(v) |
| } | |
| } | |

[Table 6]

| gicp_channel_edge_info(channel_node_idx) { | Descriptor |
|---|---|
| **gicp_edge_table_size**[channel_node_idx] | ue(v) |
| for(edge_idx = 0; edge_idx < gicp_edge_table_size[channel_node_idx]; edge _idx++) { | |
| **gicp_edge_ref_idx**[channel_node_idx][edge_idx] | u(16) |
| for(transform_idx = 0; transform_idx < gicp_static_transform_table_size; transform_idx++) | |
| **gicp_edge_static_transform_weight**[channel_node_idx][edge_idx][transf orm_idx] | ae(v) |
| for(transform_idx = 0 ; transform_idx < gicp_variable_transform_table_size; transform_idx++) | |
| **gicp_edge_variable_transform_weight**[channel_node_idx][edge_idx][tra nsform_idx] | ae(v) |
| if(edge_idx != gicp_edge_table_size[channel_node_idx] - 1) | |
| **gicp_edge_weight**[channel_node_idx][edge_idx] | ae(v) |
| } | |
| } | |

Table 4 illustrates an example of signaling for the sps_gicp_enabled_flag indicating whether transform-based cross-channel prediction is used within a video sequence, the sps_gicp_transform_table indicating information about a transform that may be used for prediction between a reference channel and a target channel, and the gicp_channel_edge_info indicating reference relationships between the reference channel and the target channel. The gicp_channel_edge_info may be generated based on a graph structure representing the reference relationships between the reference channel and the target channel.

Table 5 illustrates an example of signaling of information regarding the type of a static transform that may be used for prediction, the type of a variable transform, and a parameter that may be used to define the variable transform. In Table 5, GicpNumVariableTransformParams indicates the number of variable transform parameters defined identically at both the encoder and the decoder. For example, when a variable transform with an index represented by gicp_static_transform_table[transform_idx] in a variable transform table defined identically at both the encoder and the decoder, is a gaussian filter, two parameters regarding to horizontal/vertical size and standard deviation that may define the gaussian filter may be signaled. In this case, when inter prediction is performed using the same variable transform at both the encoder and the decoder, the value of GicpNumVariableTransformParams[transform_index] may be set to 2 identically at both the encoder and the decoder. Here, the gaussian filter is merely one example of a variable transform, and the transform that may be defined by using a parameter may be a different transform.

Table 6 illustrates an example of signaling information for reference relationships among channels and information for cross-channel prediction in a graph structure where the channels are nodes and reference relationships among nodes and transform information used for prediction are represented as edges. As shown in Table 4, the information in Table 6 may be signaled by constructing a graph structure representing the relationships between a reference channel and a target channel, repeated for the number of encoded channels of the feature/feature map in the video sequence, i.e., num_transformed_channels. In addition, transform information for prediction between the reference channel and the target channel may be signaled repeatedly for num_transformed_channels times.

Although in Table 4 to Table 6, the information is described as being defined through the SPS, this is merely an example, and such information may instead be defined in the PPS, Picture Header, Slice Header, or other locations.

The semantics of the syntax elements shown in Table 4 to Table 6 are as follows.

The sps_gicp_enabled_flag may indicate whether transform-based cross-channel prediction is enabled or applied within a video sequence. The sps_gicp_enabled_flag may be referred to as 'application information'. A value of 1 for the sps_gicp_enabled_flag may indicate that transform-based cross-channel prediction is enabled or applied, while a value of 0 for the sps_gicp_enabled_flag may indicate that transform-based cross-channel prediction is disabled or not applied.

The gicp_static_transform_table_size may indicate the size of a table for a predefined static transform (static transform table) used for transform-based cross-channel prediction within the video sequence. The static transform table may include one or more static transforms.

The gicp_static_transform_table[transform_idx] may indicate which index of the static transform defined identically in the encoder and decoder corresponds to the transform corresponding to transform_idx in the static transform table.

The gicp_variable_transform_table_size may indicate the size of a table for a variable transform (variable transform table) used for transform-based cross-channel prediction within the video sequence. The variable transform table may include one or more variable transforms. A variable transform may be defined or derived using a parameter. Here, the parameter used for defining or deriving the variable transform may be referred to as 'transform parameter information'.

The gicp_variable_transform_table[transform_idx] may indicate which index of the variable transform defined identically in the encoder and decoder corresponds to the transform corresponding to transform_idx in the variable transform table.

The gicp_variable_transform_params[transform_idx] [param_idx] may represent transform parameter information. In other words, gicp_variable_transform_params[transform_idx] [param_idx] may be a syntax element for signaling a parameter for defining the variable transform indicated by gicp_variable_transform_table[transform_idx]. When the variable transform is a gaussian filter, gicp_variable_transform_params[transform_idx] [0] may be a syntax element representing the horizontal/vertical size of the gaussian filter, and gicp_variable_transform_params[transform_idx] [1] may be a syntax element representing the standard deviation of the gaussian distribution. The gaussian filter is merely one example of a variable transform, and the variable transform may be another transform that may be defined identically at both the encoder and the decoder.

The gicp_edge_table_size[channel_node_idx] may indicate the size of a table for reference relationships (reference table). The reference table may include information about edges used to represent reference relationships among nodes and transform information used for prediction, with the encoded channel at index channel_node_idx in the video sequence being the node.

The gicp_edge_ref_idx[channel_node_idx] [edge_idx] may indicate a reference channel that the channel node (target channel) corresponding to channel_node_idx refers to during cross-channel prediction. For example, a value of 10 for gicp_edge_ref_idx[0] [edge_idx] may indicate that cross-channel prediction is performed on channel 0 (target channel) with channel 10 as the reference channel. A target channel may have multiple reference channels.

The gicp_edge_static_transform_weight[channel_node_idx][edge_idx][ transform_idx] may indicate a weight used for prediction based on the static transform defined by gicp_static_transform_table[transform_idx] and the reference channel indicated by gicp_edge_ref_idx[channel_node_idx][edge_idx]. Cross-channel prediction may be performed using a weighted sum using a weight for a static transform signaled through the gicp_static_transform_table and a weight for a variable transform signaled through the gicp_variable_transform_table.

The gicp_edge_variable_transform_weight[channel_node_idx][edge_idx ][transform_idx] may indicate a weight used for prediction based on the variable transform defined by gicp_variable_transform_table[transform_idx] and the reference channel indicated by gicp_edge_ref_idx[channel_node_idx][edge_idx]. Cross-channel prediction may be performed as a weighted sum of a weight for a static transform signaled through the gicp_static_transform_table and a weight for a variable transform signaled through the gicp_variable_transform_table.

The gicp_edge_weight[channel_node_idx] [edge_idx] may indicate the weight of each channel when the target channel has multiple reference channels. Based on the fact that the sum of the weights is 1.0, the weight for the last reference channel may be omitted. For example, when the value of gicp_edge_table_size[0] is 2, the value of gicp_edge_ref_idx[0] [0] is 5, the value of gicp_edge_ref_idx[0] [1] is 10, and the value of gicp_edge_weight[0] [0] is 0.8, the prediction for channel 0 may be performed by applying a weight of 0.8 to the prediction result using channel 5 as the reference channel, and the prediction for channel 1 may be performed by applying a weight of 0.2 to the prediction result using channel 10 as the reference channel.

## Feature Encoding Method and Feature Decoding Method

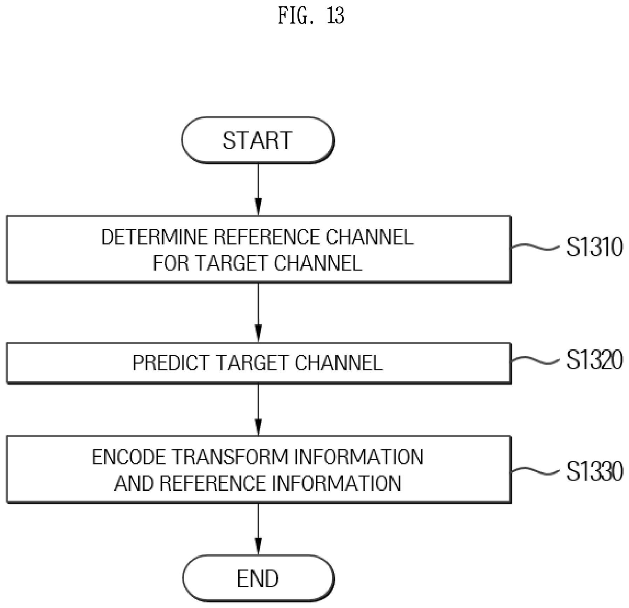

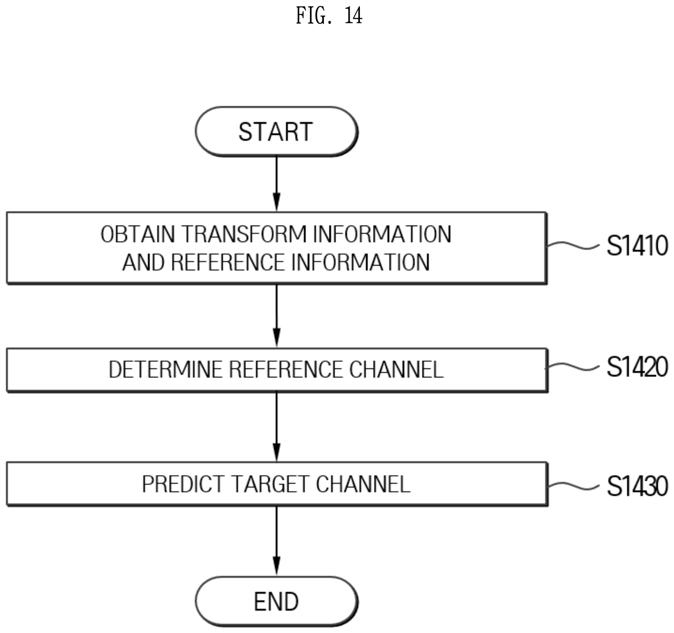

FIG. 13 illustrates an example of a feature encoding method according to the present disclosure, and FIG. 14 illustrates an example of a feature decoding method according to the present disclosure.

Referring to FIG. 13, at least one reference channel for a target channel may be determined S1310. In addition, a prediction for the target channel may be performed based on the determined reference channel S1320. The prediction for the target channel may be performed based on the reference channel and a transform. The transform may include at least one of a static transform and a variable transform. Reference information (e.g., gicp_channel_edge_info), which is information about the determined reference channel, and transform information (e.g., sps_gicp_transform_table), which is information about the applied transform, may be encoded into the bitstream 1330. The reference information may be the gicp_channel_edge_info illustrated in Table 4 and Table 6, and the transform information may be the sps_gicp_transform_table illustrated in Table 4 and Table 5.

Referring to FIG. 14, reference information (e.g., gicp_channel_edge_info) and transform information (e.g., sps_gicp_transform_table) may be obtained from a bitstream S1410. In addition, based on the obtained reference information, at least one reference channel for prediction of the target channel may be determined S1420, and the target channel may be predicted based on the determined reference channel and the transform information S1430. The prediction for the target channel may be performed based on the reference channel and a transform, and the transform may include at least one of a static transform or a variable transform.

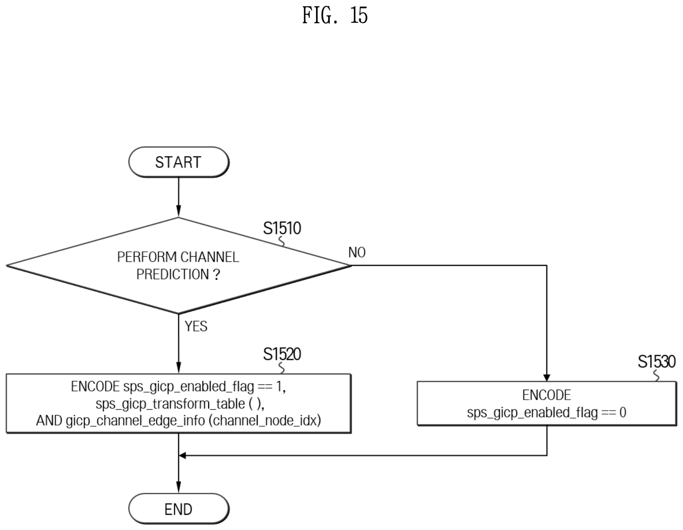

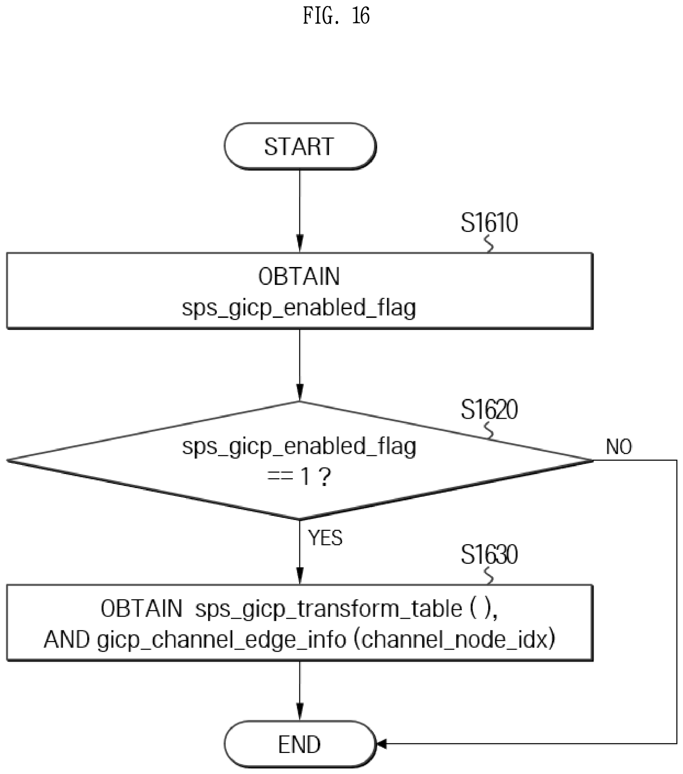

FIG. 15 illustrates an example of a feature encoding method for determining whether transform-based cross-channel prediction is enabled or applied, and FIG. 16 illustrates an example of a feature decoding method for determining whether transform-based cross-channel prediction is enabled or applied.

Referring to FIG. 15, it may be determined whether transform-based cross-channel prediction is enabled or applied S1510. When transform-based cross-channel prediction is disabled or not applied, the application information sps_gicp_enabled_flag may be encoded with a value of 0 S1530. In contrast, when transform-based cross-channel prediction is enabled or applied, the sps_gicp_enabled_flag may be encoded with a value of 1, and transform information (sps_gicp_transform_table) and reference information (gicp_channel_edge_info) may be encoded into the bitstream S1520.

Referring to FIG. 16, the sps_gicp_enabled_flag may be obtained from the bitstream S1610, and based on the value of the sps_gicp_enabled_flag, whether transform-based cross-channel prediction is enabled or applied may be determined S1620. When transform-based cross-channel prediction is enabled or applied (sps_gicp_enabled_flag == 1), transform information (sps_gicp_transform_table) and reference information (gicp_channel_edge_info) may be obtained from the bitstream S1630. In contrast, when transform-based cross-channel prediction is disabled or not applied (sps_gicp_enabled_flag == 0), the transform information (sps_gicp_transform_table) and the reference information (gicp_channel_edge_info) may not be obtained.

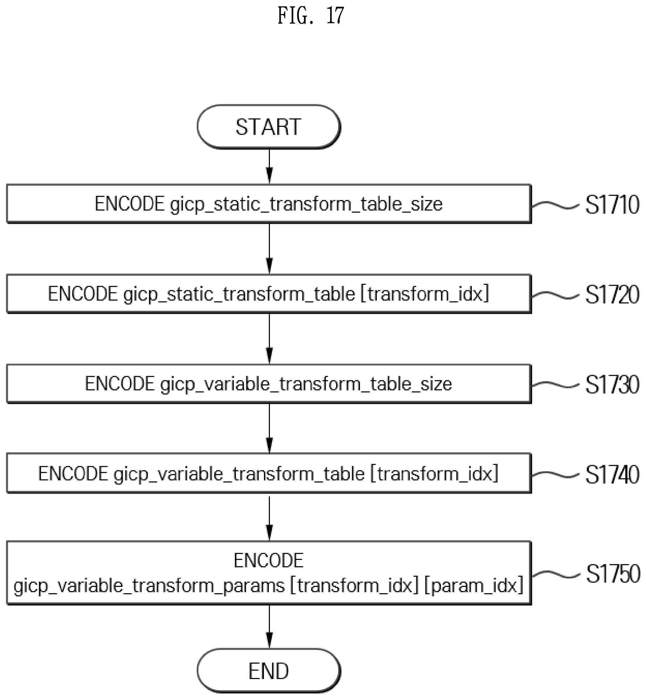

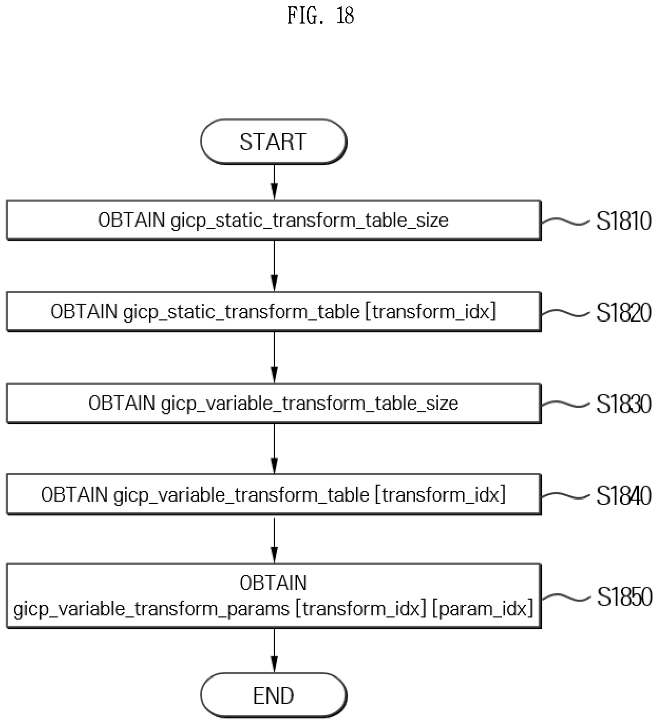

FIG. 17 illustrates an example of a feature encoding method for transform information, and FIG. 18 illustrates an example of a feature decoding method for transform information.

Referring to FIG. 17, gicp_static_transform_table_size, information indicating the size of a table for predefined static transform (static transform table) used in transform-based cross-channel prediction, may be encoded into the bitstream S1710. In addition, gicp_static_transform_table[transform_idx], information indicating which index of the static transform that is identically defined at both encoder and decoder corresponds to a transform that corresponds to transform_idx within the static transform table, may be encoded into the bitstream S1720. Through gicp_static_transform_table_size and gicp_static_transform_table[transform_idx], one or more static transforms may be defined identically at both the encoder and the decoder.

Meanwhile, gicp_variable_transform_table_size, information indicating the size of a table for a variable transform (variable transform table) used in transform-based cross-channel prediction, may be encoded into the bitstream S1730. In addition, gicp_variable_transform_table[transform_idx], information indicating which index of the variable transform that is identically defined at both encoder and decoder corresponds to a transform that corresponds to transform _idx within the variable transform table, may be encoded into the bitstream S1740. Furthermore, gicp_variable_transform_params[transform_idx][param_idx], transform parameter information for defining the variable transform indicated by gicp_variable_transform_table[transform_idx], may be encoded into the bitstream S1750.

Referring to FIG. 18, gicp_static_transform_table_size, information indicating the size of the static transform table, may be obtained from the bitstream S1810. In addition, gicp_static_transform_table[transform_idx], information indicating which index of the static transform that is identically defined at both encoder and decoder corresponds to a transform that corresponds to transform _idx within the static transform table, may be obtained from the bitstream S1820. Through gicp_static_transform_table_size and gicp_static_transform_table[transform_idx], one or more static transforms may be defined identically at both the encoder and the decoder.

Meanwhile, gicp_variable_transform_table_size, information indicating the size of the variable transform table, may be obtained from the bitstream S1830. In addition, gicp_variable_transform_table[transform_idx], information indicating which index of the variable transform that is identically defined at both encoder and decoder corresponds to a transform that corresponds to transform _idx within the variable transform table, may be obtained from the bitstream S1840. Furthermore, gicp_variable_transform_params[transform_idx][param_idx], transform parameter information for defining the variable transform indicated by gicp_variable_transform_table[transform_idx], may be obtained from the bitstream S1850.

At least one of a static transform and a variable transform may be used for cross-channel prediction. For example, a first transform and a second transform may be applied to a reference channel, and the target channel may be predicted based on the reference channel to which the first transform and the second transform are applied. Here, the first transform and the second transform may be a static transform or a variable transform. Alternatively, one of the first transform and the second transform may be a static transform and the other may be a variable transform.

When the first transform is a static transform, the first transform may be one of the predefined static transforms, and the static transform used as the first transform may correspond to the static transform indicated by the first transform information (gicp_static_transform_table[transform_idx]).

When the second transform is a variable transform, the second transform may be one of the predefined variable transform candidates, and the variable transform used as the second transform may be derived based on second transform information. Here, the second transform information may include gicp_variable_transform_table[transform_idx] and transform parameter information (gicp_variable_transform_params[transform_idx][param_idx]).

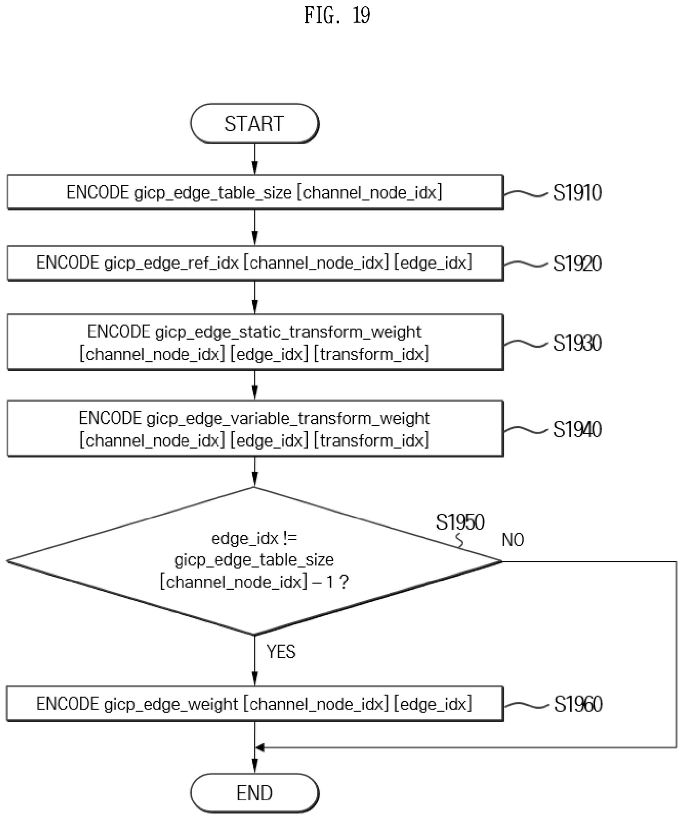

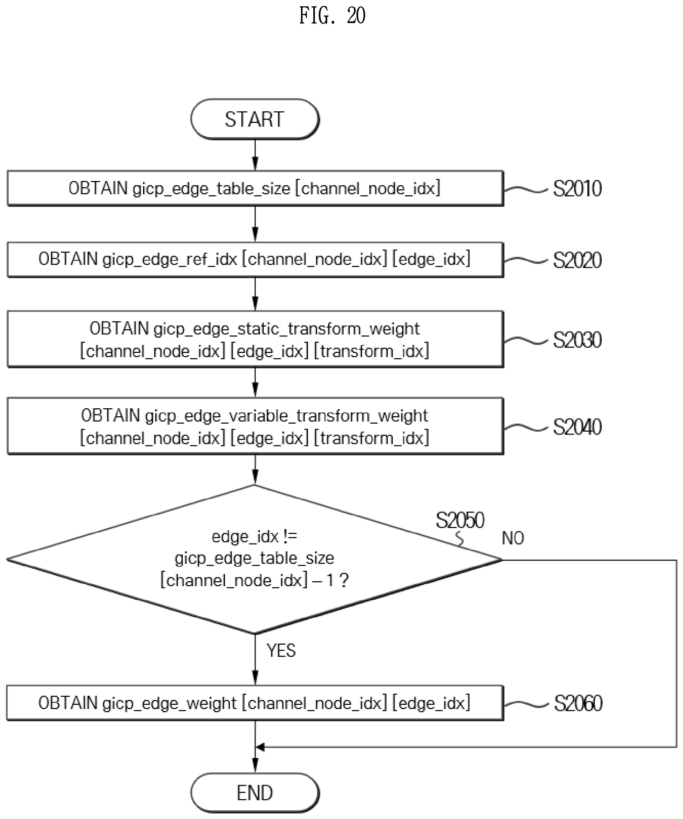

FIG. 19 illustrates an example of a feature encoding method for reference information, and FIG. 20 illustrates an example of a feature decoding method for reference information.

Referring to FIG. 19, gicp_edge_table_size[channel_node_idx], which indicates the size of a table for reference relationships (reference table), may be encoded into the bitstream S1910. The reference table may include information representing reference relationships among channels. In addition, gicp_edge_ref_idx[channel_node_idx] [edge_idx], information indicating a reference channel referred to by the target channel corresponding to channel_node_idx during cross-channel prediction, may be encoded into the bitstream S1920.

Meanwhile, information on weights used for a weighted sum of the reference channels to which transforms are applied may be encoded into the bitstream S1930, S1940. For example, a weight for the reference channel to which the first transform is applied or a weight for the reference channel to which the second transform is applied may be encoded into the bitstream. In other words, the information on weights may include at least one of a weight for the reference channel to which the first transform is applied or a weight for the reference channel to which the second transform is applied.

When the first transform is a static transform, a weight for the reference channel to which the first transform is applied may be encoded as gicp_edge_static_transform_weight[channel_node_idx][edge_idx][ transform_idx] S1930. When the second transform is a variable transform, a weight for the reference channel to which the second transform is applied may be encoded as gicp_edge_variable_transform_weight[channel_node_idx][edge_idx ][transform_idx] S1940.

When there are multiple reference channels, a weight for each of the reference channels (gicp_edge_weight [channel_node_idx][edge_idx]) may be encoded into the bitstream S1960. Here, the weights for the reference channels may be encoded only for the reference channels except for the last reference channel S1950.

Referring to FIG. 20, gicp_edge_table_size[channel_node_idx], information indicating the size of the reference table, may be obtained from the bitstream S2010. The reference table may include information representing reference relationships among channels. In addition, gicp_edge_ref_idx[channel_node_idx][edge_idx], information indicating a reference channel referred to by the target channel corresponding to channel_node_idx during cross-channel prediction, may be obtained from the bitstream S2020.

Meanwhile, information on weights used for a weighted sum of the reference channels to which transforms are applied may be obtained from the bitstream S2030, S2040. For example, a weight for the reference channel to which the first transform is applied or a weight for the reference channel to which the second transform is applied may be obtained from the bitstream. In other words, the information on weights may include at least one of a weight for the reference channel to which the first transform is applied or a weight for the reference channel to which the second transform is applied.

When the first transform is a static transform, a weight for the reference channel to which the first transform is applied may be obtained as gicp_edge_static_transform_weight[channel_node_idx][edge_idx][ transform_idx] S2030. When the second transform is a variable transform, a weight for the reference channel to which the second transform is applied may be obtained as gicp_edge_variable_transform_weight[channel_node_idx][edge_idx ][transform_idx] S2040.

When there are multiple reference channels, a weight for each of the reference channels (gicp_edge_weight [channel_node_idx][edge_idx]) may be obtained from the bitstream S2060. Here, the weights for the reference channels may be obtained only for the reference channels except for the last reference channel S2050.

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding apparatus) and an encoder (an encoding apparatus) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an augmented reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

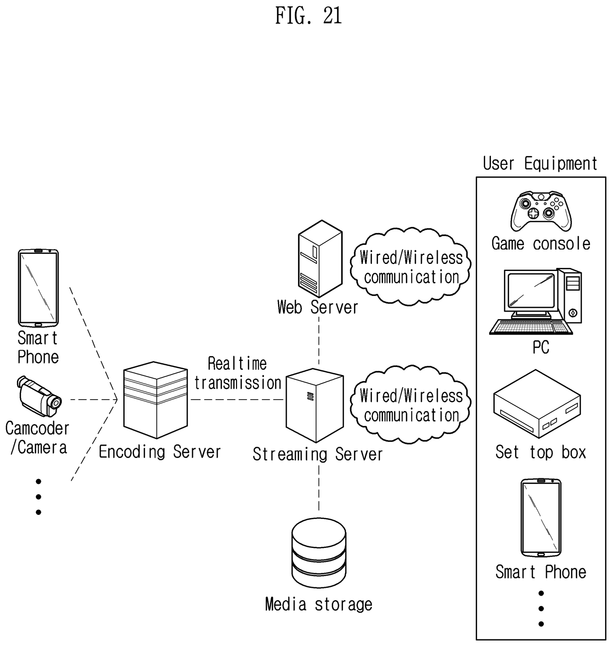

FIG. 21 is a diagram showing an example of a content streaming system to which embodiments of the present disclosure may be applied.

Referring to FIG. 21, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

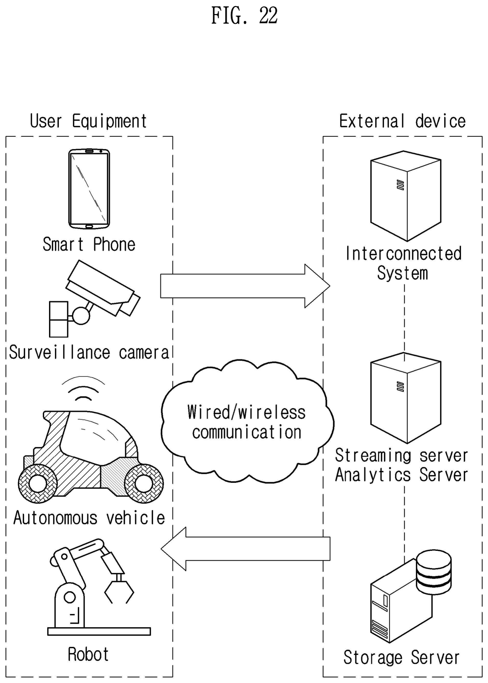

FIG. 22 is a diagram showing another example of a content streaming system to which embodiments of the present disclosure may be applied.

Referring to FIG. 22, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

[Industrial Applicability]

An embodiment according to the present disclosure may be used to encode/decode a feature/a feature map.

**Claims**

1. A feature decoding method performed by a feature decoding apparatus, comprising:

   obtaining reference information from a bitstream;
   based on the reference information, determining at least one reference channel for a target channel; and
   based on the determined reference channel, predicting the target channel.

2. The feature decoding method of Claim 1, wherein the predicting comprises:

   applying a first transform and a second transform to the determined reference channel; and
   based on the reference channel to which the first transform and the second transform are applied, predicting the target channel.

3. The feature decoding method of Claim 2, wherein the first transform is one of predefined transforms.

4. The feature decoding method of Claim 3, wherein the first transform is a transform indicated by first transform information among the predefined transforms, and
wherein the first transform information is obtained from the bitstream.

5. The feature decoding method of Claim 2, wherein the second transform is derived based on second transform information among second transform candidates, and
wherein the second transform information is obtained from the bitstream.

6. The feature decoding method of Claim 5, wherein the second transform information includes transform parameter information for deriving the second transform from the second transform candidates.

7. The feature decoding method of Claim 2, wherein the target channel is predicted based on a weighted sum of reference channels to which the first transform and the second transform are applied.

8. The feature decoding method of Claim 7, wherein information about weights used in the weighted sum of the reference channels is obtained from the bitstream, and
wherein the information about the weights includes at least one of a weight for the reference channel to which the first transform is applied or a weight for the reference channel to which the second transform is applied.

9. The feature decoding method of Claim 1, wherein the reference information is obtained based on application information obtained from the bitstream indicating that prediction for a channel is performed.

10. A feature encoding method performed by a feature encoding apparatus, comprising:

   determining at least one reference channel for a target channel; and
   based on the determined reference channel, predicting the target channel,
   wherein reference information indicating the determined reference channel is encoded into a bitstream.

11. The feature encoding method of Claim 10, wherein the predicting comprises:

   applying a first transform and a second transform to the determined reference channel; and
   based on the reference channel to which the first transform and the second transform are applied, predicting the target channel.

12. The feature encoding method of Claim 11, wherein the target channel is predicted based on a weighted sum of reference channels to which the first transform and the second transform are applied.

13. The feature encoding method of Claim 12, wherein information about weights used in the weighted sum of the reference channels is encoded into the bitstream, and
wherein the information about the weights includes at least one of a weight for the reference channel to which the first transform is applied or a weight for the reference channel to which the second transform is applied.

14. A computer-readable recording medium storing a bitstream generated by the feature encoding method of Claim 10.

15. A method for transmitting a bitstream generated by a feature encoding method, wherein the feature encoding method comprises:

   determining at least one reference channel for a target channel; and
   based on the determined reference channel, predicting the target channel,
   wherein reference information indicating the determined reference channel is encoded into a bitstream.

FIG.1

FIG.2

EP 4 651 496 A1

FIG.3

EP 4 651 496 A1

FIG.4

EP 4 651 496 A1

FIG.5

```
            ┌─────────────┐
            │    START    │
            └──────┬──────┘
                   │
                   ▼
   ┌───────────────────────────────────┐
   │              PREDICT              │ ～ S510
   └───────────────┬───────────────────┘
                   │
                   ▼
   ┌───────────────────────────────────┐
   │          RESIDUAL PROCESS         │ ～ S520
   └───────────────┬───────────────────┘
                   │
                   ▼
   ┌───────────────────────────────────┐
   │    ENCODE FEATURE/FEATURE MAP     │
   │  INFORMATION INCLUDING PREDICTION │ ～ S530
   │ INFORMATION AND RESIDUAL INFORMATION │
   └───────────────┬───────────────────┘
                   │
                   ▼
            ┌─────────────┐
            │     END     │
            └─────────────┘
```

FIG. 6

```
        ( START )
            │
            ▼
┌───────────────────────────┐
│  OBTAIN FEATURE/FEATURE MAP │ ～ S610
│  INFORMATION FROM BITSTREAM │
└───────────────────────────┘
            │
            ▼
┌───────────────────────────┐
│          PREDICT           │ ～ S620
└───────────────────────────┘
            │
            ▼
┌───────────────────────────┐
│      RESIDUAL PROCESS      │ ～ S630
└───────────────────────────┘
            │
            ▼
┌───────────────────────────┐
│ RECONSTRUCT FEATURE/FEATURE MAP │ ～ S640
└───────────────────────────┘
            │
            ▼
┌───────────────────────────┐
│  INLOOP FILTERING (optional) │ ～ S650
└───────────────────────────┘
            │
            ▼
         ( END )
```

FIG. 7

VIDEO SOURCE (710)

700

FEATURE EXTRACTION NETWORK

FEATURE SET (720)

FIG. 8

FIG. 9

Channel 64

| -1.25 | -0.91 | 0.75 | 1.52 | -0.72 | 5.18 | 4.22 |
| -1.27 | 0.36 | 2.27 | 3.20 | 1.34 | -0.65 | -0.94 |
| | | | | | -0.41 | -0.65 |

Channel 2
Channel 1

| -0.64 | -0.33 | 0.98 | 1.52 | -0.72 | 1.30 | 1.32 |
| -1.02 | 0.34 | 0.55 | -0.90 | 1.34 | -0.18 | -0.29 |
| -1.00 | 0.37 | 0.89 | -0.90 | 1.36 | -0.51 | -0.31 |
| -0.36 | 0.21 | 0.70 | -0.42 | 1.93 | -0.62 | 0.20 |
| 0.99 | 0.39 | 2.12 | -0.31 | 0.18 | 1.6 | -0.27 |
| 2.24 | -0.33 | 0.33 | 2.40 | -0.73 | 1.82 | -0.56 |
| -0.50 | 0.03 | 1.21 | -0.40 | 1.73 | -0.51 | 0.23 |

-0.62 | 0.51
3.12 | -0.95
5.52 | -1.25
-1.59 | 10.52

FIG. 10

(a)

(b)

(c)

FIG. 11A

(a)

(b)

FIG. 11B

(c)

## FIG.12

Data of reference channel

$f_{s1}$  $f_{s2}$  $\cdots$  $f_{sm}$  $f_{v1;\theta_1}$  $f_{v2;\theta_2}$  $\cdots$  $f_{vn;\theta_n}$

Predefined transform and variable transform

$\otimes$

$w_{s1}$  $w_{s2}$  $\cdots$  $w_{sm}$  $w_{v1}$  $w_{v2}$  $\cdots$  $w_{vn}$

Weight value of candidate channel

$\oplus$

Cross-channel prediction result data

Data of encoding/decoding target channel

Residual data of encoding/decoding target channel

FIG. 13

START

DETERMINE REFERENCE CHANNEL
FOR TARGET CHANNEL — S1310

PREDICT TARGET CHANNEL — S1320

ENCODE TRANSFORM INFORMATION
AND REFERENCE INFORMATION — S1330

END

FIG. 14

START

OBTAIN TRANSFORM INFORMATION
AND REFERENCE INFORMATION — S1410

DETERMINE REFERENCE CHANNEL — S1420

PREDICT TARGET CHANNEL — S1430

END

FIG. 15

START

S1510

PERFORM CHANNEL
PREDICTION ?

NO

YES

S1520

ENCODE sps_gicp_enabled_flag == 1,
sps_gicp_transform_table ( ),
AND gicp_channel_edge_info (channel_node_idx)

S1530

ENCODE
sps_gicp_enabled_flag == 0

END

FIG. 16

START

S1610

OBTAIN
sps_gicp_enabled_flag

S1620

sps_gicp_enabled_flag
== 1 ?

NO

YES

S1630

OBTAIN sps_gicp_transform_table ( ),
AND gicp_channel_edge_info (channel_node_idx)

END

FIG. 17

START

ENCODE gicp_static_transform_table_size — S1710

ENCODE gicp_static_transform_table [transform_idx] — S1720

ENCODE gicp_variable_transform_table_size — S1730

ENCODE gicp_variable_transform_table [transform_idx] — S1740

ENCODE
gicp_variable_transform_params [transform_idx] [param_idx] — S1750

END

FIG. 18

START

OBTAIN gicp_static_transform_table_size — S1810

OBTAIN gicp_static_transform_table [transform_idx] — S1820

OBTAIN gicp_variable_transform_table_size — S1830

OBTAIN gicp_variable_transform_table [transform_idx] — S1840

OBTAIN
gicp_variable_transform_params [transform_idx] [param_idx] — S1850

END

FIG. 19

START

ENCODE gicp_edge_table_size [channel_node_idx] ~ S1910

ENCODE gicp_edge_ref_idx [channel_node_idx] [edge_idx] ~ S1920

ENCODE gicp_edge_static_transform_weight
[channel_node_idx] [edge_idx] [transform_idx] ~ S1930

ENCODE gicp_edge_variable_transform_weight
[channel_node_idx] [edge_idx] [transform_idx] ~ S1940

edge_idx !=
gicp_edge_table_size
[channel_node_idx] − 1 ?  S1950  NO

YES

ENCODE gicp_edge_weight [channel_node_idx] [edge_idx] ~ S1960

END

FIG. 20

START

OBTAIN gicp_edge_table_size [channel_node_idx] — S2010

OBTAIN gicp_edge_ref_idx [channel_node_idx] [edge_idx] — S2020

OBTAIN gicp_edge_static_transform_weight
[channel_node_idx] [edge_idx] [transform_idx] — S2030

OBTAIN gicp_edge_variable_transform_weight
[channel_node_idx] [edge_idx] [transform_idx] — S2040

edge_idx !=
gicp_edge_table_size
[channel_node_idx] − 1 ?  — S2050  NO

YES

OBTAIN gicp_edge_weight [channel_node_idx] [edge_idx] — S2060

END

FIG. 21

FIG. 22

User Equipment

Smart Phone

Surveillance camera

Autonomous vehicle

Robot

Wired/wireless communication

External device

Interconnected System

Streaming server Analytics Server

Storage Server

# EP 4 651 496 A1

## INTERNATIONAL SEARCH REPORT

International application No.

**PCT/KR2024/000440**

### A. CLASSIFICATION OF SUBJECT MATTER

**H04N 19/61**(2014.01)i; **H04N 19/70**(2014.01)i; **H04N 19/105**(2014.01)i; **H04N 19/184**(2014.01)i; **G06N 3/04**(2006.01)i

According to International Patent Classification (IPC) or to both national classification and IPC

### B. FIELDS SEARCHED

Minimum documentation searched (classification system followed by classification symbols)

H04N 19/61(2014.01); G06N 3/02(2006.01); G06T 5/00(2006.01); G06T 9/00(2006.01); H04N 19/117(2014.01); H04N 19/119(2014.01); H04N 19/122(2014.01); H04N 19/124(2014.01); H04N 19/136(2014.01); H04N 19/573(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 피처(feature), 참조(reference), 채널(channel), 예측(prediction), 변환(transformation)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0073666 A (ELECTRONICS AND TELECOMMUNICATIONS RESEARCH INSTITUTE et al.) 03 June 2022 (2022-06-03) See paragraphs [0072] and [0281]-[0297]; and figures 11 and 25-27. | 1,9-10,14-15 |
| A | | 2-8,11-13 |
| Y | JP 2019-213096 A (KDDI CORP.) 12 December 2019 (2019-12-12) See paragraphs [0046] and [0096]; and figures 1-3. | 1,9-10,14-15 |
| A | KR 10-2022-0097251 A (HYUNDAI MOTOR COMPANY et al.) 07 July 2022 (2022-07-07) See paragraphs [0012]-[0014]; and claims 1-8. | 1-15 |
| A | KR 10-2022-0040405 A (ELECTRONICS AND TELECOMMUNICATIONS RESEARCH INSTITUTE et al.) 30 March 2022 (2022-03-30) See paragraphs [0010]-[0031]; and claims 1-8. | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2024** | **18 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

46

**INTERNATIONAL SEARCH REPORT**

| International application No. |
| --- |
| **PCT/KR2024/000440** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2018-0131073 A (SAMSUNG ELECTRONICS CO., LTD.) 10 December 2018 (2018-12-10)<br>See paragraphs [0007]-[0025]; and claims 1-14. | 1-15 |

Form PCT/ISA/210 (second sheet) (July 2022)

<div align="center">

**INTERNATIONAL SEARCH REPORT**
Information on patent family members

</div>

International application No.

**PCT/KR2024/000440**

| Patent document cited in search report | | | Publication date (day/month/year) | Patent family member(s) | | | Publication date (day/month/year) |
|---|---|---|---|---|---|---|---|
| KR | 10-2022-0073666 | A | 03 June 2022 | None | | | |
| JP | 2019-213096 | A | 12 December 2019 | CN | 111886860 | A | 03 November 2020 |
| | | | | EP | 3806459 | A1 | 14 April 2021 |
| | | | | JP | 2023-015241 | A | 31 January 2023 |
| | | | | JP | 7407892 | B2 | 04 January 2024 |
| | | | | US | 11463684 | B2 | 04 October 2022 |
| | | | | US | 2021-0112242 | A1 | 15 April 2021 |
| | | | | WO | 2019-235026 | A1 | 12 December 2019 |
| KR | 10-2022-0097251 | A | 07 July 2022 | US | 11516478 | B2 | 29 November 2022 |
| | | | | US | 2022-0210435 | A1 | 30 June 2022 |
| KR | 10-2022-0040405 | A | 30 March 2022 | US | 2022-0092827 | A1 | 24 March 2022 |
| KR | 10-2018-0131073 | A | 10 December 2018 | CN | 110494892 | A | 22 November 2019 |
| | | | | CN | 110494892 | B | 03 October 2023 |
| | | | | EP | 3555844 | A1 | 23 October 2019 |
| | | | | EP | 3555844 | B1 | 22 June 2022 |
| | | | | US | 10733767 | B2 | 04 August 2020 |
| | | | | US | 2018-0350110 | A1 | 06 December 2018 |
| | | | | WO | 2018-221863 | A1 | 06 December 2018 |

Form PCT/ISA/210 (patent family annex) (July 2022)